# EUROPEAN PATENT APPLICATION

(11) **EP 4 624 532 A1**
(43) Date of publication of application: **01.10.2025**
(21) Application number: 24167035.5
(22) Date of filing: 27.03.2024
(51) Int. Cl.: C08L 95/00

(54) **SUSTAINABLE ACOUSTIC DAMPING MATERIAL**

(71) Applicant: Sika Technology AG, 6340 Baar (CH)
(72) Inventor: BECKENSTRÄTER, Hanna, 97082 Würzburg (DE); WITT, Robert, 63110 Rodgau (DE); CELIK, Nazan, 63477 Maintal (DE); SCHWAB, Frederick, 60594 Frankfurt (DE); SPENGLER, Jan, 64747 Breuberg (DE); VIDOVIC, Marko, 67227 Frankenthal (DE)
(74) Representative: Sika Patent Attorneys

(57) **Abstract**

The invention relates to an acoustic damping material comprising:
a) Tall oil pitch TOP,
b) At least one tackifying resin TR,
c) Optionally at least one thermoplastic polymer TP, and
d) At least 15 wt.-%, preferably at least 25 wt.-% of at least one solid particulate filler F.

## Description

### Technical field

The present invention relates acoustic damping materials and use thereof for damping of vibrations and noise of components and structures in manufactured articles, such as transportation vehicles and articles of home appliance and general industry. Particularly the invention relates to sustainable acoustic damping materials comprising bio-based components.

### Background of the invention

Acoustic damping materials are widely used in automotive, home appliance, and general industries for reducing undesired vibrations, structure borne noise, and air borne noise. For example, in automotive vehicles, it is desirable to prevent transfer of vibrations generated by the motors, pumps, gears and other dynamic force generators through the body of the vehicle into the passenger compartment. Structure borne noise is produced when the vibrations generated by a dynamic force generator are transmitted through a supporting structure, typically a frame or other hollow structure, to a noise emitting surface, such as a metallic or plastic panel, which transforms the mechanical vibrations into sound waves. Structure borne noise and vibrations in general can be effectively reduced by application of vibration damping materials directly to the structures and surfaces of components subjected to vibrational disturbances, such as to surfaces of vehicle panels, floors, and to shells of articles of home appliance and general industry, such as machines, washers, and dryers.

Acoustic damping materials used for damping of vibrating surfaces are commonly provided as pre-formed single- and multi-layer elements or as liquid compositions, which are applied directly on surface of a substrate. Pre-formed damping elements typically comprise a layer of damping material, which is in direct contact with a surface of the substrate to be damped against vibrational disturbances. The layer of damping material is capable of dissipating kinetic energy of the vibrating surface into heat energy through extension and compression of the material of the damping layer. Such damping elements can further comprise an adhesive layer, such as a layer of a pressure sensitive adhesive or a hot-melt adhesive, to enable bonding of the damping element to a surface of a substrate. Liquid applied damping systems are typically thermally drying, gelling, or reactive compositions, which are applied on the surface of the substrate in liquid state, for example by spraying.

Commonly used damping materials include highly filled compositions comprising bitumen, elastomers, or thermoplastic polymers and varying amounts of additives, such as plasticizers, processing aids, rheology modifiers, and drying agents. Fillers are added to these compositions to meet different design goals. Some of the fillers are used to improve the acoustic damping properties, whereas other fillers are used to reduce the density of the material or to replace more expensive materials in order to reduce costs of raw materials. Typical fillers used in acoustic damping materials include, particularly, mineral fillers, such as calcium carbonate. Light weight mineral fillers, such as hollow ceramic spheres and hollow glass spheres have been widely used to reduce the density of the acoustic damping material and eventually to reduce the weight of the acoustic damping element.

Almost all constituents of acoustic damping materials of prior art have a relatively high CO₂ footprint due to the petroleum based origin of the raw materials and energy intensive production process. Especially the main components of acoustic damping materials, including synthetic polymers, bitumen, and fillers are commonly based on 100 % of non-renewable raw materials. It would generally be advantageous to replace most of the fossil-based raw materials with bio-based alternatives in the acoustic damping materials. However, such replacement should not result in deterioration of the application relevant properties.

There is thus a need for a new type of acoustic damping material, which can be used for damping of vibrations and noises of components and structures in manufactured articles, which material has a significantly lower CO₂ footprint compared to damping elements of prior art.

### Summary of the invention

The object of the present invention is to provide a sustainable acoustic damping material for use in damping elements, which are suitable for damping of undesired vibrations and noise in structures of manufactured articles.

Surprisingly, it has been found that the features of claim 1 achieve this object.

Particularly, it was surprisingly found out that tall oil can be used to replace bitumen in a conventional acoustic damping material. The modified damping material has a significantly lower CO₂ footprint compared to bitumen- based damping materials of prior art.

Specifically, according to the invention, an acoustic damping material is provided, the material comprising:
a) tall oil pitch **TOP,**
b) at least one tackifying resin **TR,**
c) at least one thermoplastic polymer **TP,** and
d) at least 15 wt.-%, preferably at least 25 wt.-% of at least one solid particulate filler **F.**

Other subjects of the present invention are presented in other independent claims.

Preferred aspects of the invention are presented in the dependent claims.

### Brief description of the Drawings

Fig. 1 shows a cross-section of a damping element (1) comprising of a damping layer (2) and an adhesive layer (3).
Fig 2. Shows a cross-section of a damping element (1) comprising a damping layer (2), an adhesive layer (3), and a constraining layer (4).
Fig. 3 shows a cross-section of a vibration and/or noise damped system comprising a structure (5) having a noise emitting surface (6) and a damping element (1), wherein the damping layer (2) is bonded to the noise emitting surface (6) via the adhesive layer (3).

### Detailed description of the invention

The subject of the present invention is an acoustic damping material comprising:
a) Tall oil pitch **TOP,**
b) At least one tackifying resin **TR,**
c) Optionally at least one thermoplastic polymer **TP,** and
d) At least 15 wt.-%, preferably at least 25 wt.-% of at least one solid particulate filler **F.**

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrenedivinylbenzene gel with porosity of 100 Angstrom, 1000 Angstrom and 10000 Angstrom as the column, and, depending on the molecule, tetrahydrofurane as a solvent, at 35 °C, or 1,2,4-trichlorobenzene as a solvent, at 160 °C.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "softening point" refers to a temperature at which compound softens in a rubberlike state, or a temperature at which the crystalline portion within the compound melts. The softening point is preferably determined by Ring and Ball measurement conducted according to EN 1238:2011 standard.

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The "amount or content of at least one compound X" in a composition, for example "the amount of the at least one thermoplastic polymer TP" refers to the sum of the individual amounts of all thermoplastic polymers TP contained in the composition. For example, in case the composition comprises 20 wt.-% of at least one thermoplastic polymer TP, the sum of the amounts of all thermoplastic polymers TP contained in the composition equals 20 wt.-%.

The acoustic damping material comprises as a first compulsory component tall oil pitch **TOP.** The term "tall oil pitch" refers in the present disclosure to the residue from the distillation of tall oil. It contains primarily high-boiling esters of fatty acids and rosin.

In one embodiment, the acoustic damping material comprises 1.5 - 45 wt.-%, preferably 5 - 40 wt.-%, more preferably 7.5 - 35 wt.-%, even more preferably 10 - 30 wt.-% of the tall oil pitch **TOP.**

It may be preferable that the tall oil pitch has an acid number measured according to ISO 2114:2000 standard of 55 - 75 mg KOH/g, preferably 15 - 50 mg KOH/g.

The acoustic damping material further comprises at least one tackifying resin **TR.**

The term "tackifying resin" designates in the present disclosure resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25 °C.

Suitable tackifying resins to be used in the thermally expandable composition have a relatively low number average molecular weight (Mₙ), such as not more than 5000 g/mol, in particular not more than 3500 g/mol, preferably not more than 2500 g/mol and a softening point (Tₛ), determined by a Ring and Ball method according to DIN EN 1238:2011, of at or below 175 °C, preferably at or below 165 °C, more preferably at or below 155 °C. Suitable tackifying resins include, in particular, synthetic resins, natural resins, and chemically modified natural resins.

The term "synthetic resin" designates in the present disclosure compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include C₄, Cs, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include Cs, C₉, and C₁₀ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present disclosure synthetic resins made by polymerizing mixtures of unsaturated monomers obtained from petroleum-based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Suitable hydrocarbon resins are commercially available, for example, under the trade name of Wingtack^{®}, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from ExxonMobil Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

In one exemplary embodiment, the acoustic damping material comprises 0.5 - 35 wt.-%, preferably 2.5 - 30 wt.-%, more preferably 3.5 - 25 wt.-%, even more preferably 5 - 25 wt.-%, of the at least one tackifying resin **TR.**

Especially preferred tackifying resins have a softening point determined by Ring and Ball measurement conducted according to EN 1238:2011 standard in the range of 75 - 165 °C, preferably 85 - 155 °C, more preferably 90 - 145 °C.

In one exemplary embodiment, the acoustic composition further comprises at least one thermoplastic polymer **TP.**

The term "thermoplastic" refers in the present disclosure to any material which can be melted and re-solidified with little or no change in physical properties. Various types of thermoplastic polymers, including crystalline, semi-crystalline, and amorphous polymers and thermoplastic elastomers are suitable for use as the at least one thermoplastic polymer **TP.**

In one exemplary embodiment, the acoustic damping material comprises 0.5 - 20 wt.-%, preferably 1 - 15 wt.-%, more preferably 1.5 - 12.5 wt.-%, even more preferably 2.5 - 10 wt.-% of the thermoplastic polymer **TP.**

In one exemplary embodiment, the at least one thermoplastic polymer **TP** is selected from ethylene vinyl acetate copolymers, polyethylenes, propylene copolymers, and styrene block copolymers.

In one exemplary embodiment, the acoustic damping material comprises at least one ethylene vinyl acetate copolymer **TP1.**

Especially suitable ethylene vinyl acetate copolymers include those having a content of a structural unit derived from vinyl acetate in the range of 4 - 50 wt.-%, preferably 10-40 wt.-%, based on the weight of the copolymer. Suitable copolymers of ethylene and vinyl acetate are commercially available, for example, under the trade name of Escorene^{®} (from Exxon Mobil), under the trade name of Primeva^{®} (from Repsol Quimica S.A.), and under the trade name of Evatane^{®} (from Arkema Functional Polyolefins).

In another exemplary embodiment, the acoustic damping material comprises at least one polyethylene **TP2.**

Suitable polyethylenes include ethylene homopolymers and ethylene copolymers, preferably selected from the group consisting of low-density polyethylene (LDPE) or linear low-density polyethylene (LLDPE), or high-density polyethylene (HDPE), preferably linear low-density polyethylene (LLDPE).

According to one or more embodiments, the at least one polyethylene **TP2** has:
- a melt flow index (MFI) determined according to ISO 1133 (190 °C/2.16 kg) of at least 35 g/10 min, preferably at least 50 g/10 min, more preferably at least 75 g/10 min and/or
- a softening point determined according to ISO 306:2013 standard of at or below 150 °C, preferably at or below 135 °C, more preferably at or below 115 °C.

In another exemplary embodiment, the acoustic damping material comprises at least one propylene copolymer **TP3.**

Especially suitable propylene copolymers include propylene-ethylene copolymers and propylene-α-olefin random and block copolymers of propylene and one or more C₄-C₂₀ α-olefin monomers, particularly one or more of 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of propylene-derived units, based on the total weight of the copolymer.

In one exemplary embodiment, the at least one propylene copolymer **TP3** is a propylene-ethylene copolymer, preferably a propylene-ethylene random copolymer, preferably having an ethylene content of 5 - 20 wt.-%, more preferably 9 - 18 wt.-%, based on the weight of the propylene-ethylene copolymer.

Furthermore, the propylene-ethylene copolymer may have:
- a flexural modulus at 23°C determined according to ISO 178:2019 standard of not more than 100 MPa, preferably not more than 50 MPa and/or
- a melt flow rate (230 °C/2.16 kg) determined according to ISO 1133 standard of not more than 50 g/10 min, preferably not more than 25 g/10 min and/or
- a density at 23 °C determined according to ASTM D-792 standard of 0.850 - 0.900 g/cm3, preferably 0.855 - 0.890 g/cm³ and/or
- a Vicat softening point determined according to ASTM 1525 standard using a weight of 200 g of equal or less than 95 °C, preferably equal or less than 85 °C, and/or
- a heat of fusion as determined by DSC of not more than 50 J/g, preferably not more than 25 J/g, more preferably not more than 15 J/g, even more preferably not more than 10 J/g and/or
- a percent crystallinity as determined by DSC procedure of not more than 25 %, preferably not more than 10 %, more preferably not more than 2.5 % of that of isotactic polypropylene.

Regarding the determination of the percent crystallinity of the copolymer, the heat of fusion of isotactic polypropylene (100 % crystallinity) is estimated at 189 J/g.

Particularly suitable propylene-ethylene copolymers are commercially available under the trade name of Versify^{®} (from Dow Chemicals) and Vistamaxx^{®} (from Exxon Mobil).

In a further exemplary embodiment, the acoustic damping material comprises at least one styrene block copolymer **TP4.**

Suitable styrene block copolymers include block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, the linear structure being especially preferred.

Suitable SI, SIS, SB, and SBS block copolymers are commercially available, for example from TSRC/Dexco under the trade name of Vector^{®}, such as Vector^{®} 7000-series, from Kraton Polymers under the trade name of Kraton^{®} D-series, and from Dynasol under the trade name of Calprene^{®}.

It may further be preferred that the acoustic damping material comprises at least one first ethylene vinyl acetate copolymer **TP11** and at least one second ethylene vinyl acetate copolymer **TP12,** wherein the **TP11** has a melt flow index (MFI) determined according to ISO 1133 (190 °C/2.16 kg) of not more than 25 g/10 min, preferably not more than 15 g/10 min and the **TP12** has a melt flow index (MFI) determined according to ISO 1133 (190 °C/2.16 kg) of at least 100 g/10 min, preferably at least 200 g/10 min.

Furthermore, the acoustic damping material may comprise a combination of the one or more of the thermoplastic polymers **TP1** - **TP4.**

In one exemplary embodiment, the acoustic damping material comprises the at least one ethylene vinyl acetate copolymer **TP1** or a combination of the first ethylene vinyl acetate copolymer **TP11** and at least one second ethylene vinyl acetate copolymer **TP12** and in addition the at least one propylene copolymer **TP4.**

It may be preferred that the weight ratio of the amount of **TP1** or the sum of the amounts of **TP11** and **TP12** to the amount of **TP4** is in the range of 2:1 to 1:2, preferably 1.5:1 to 1:1.5.

The acoustic damping material further contains at least 15 wt.-%, preferably at least 25 wt.-% of at least one solid particulate filler **F.**

In one exemplary embodiment, the acoustic damping material comprises 25 - 75 wt.-%, preferably 35 - 65 wt.-%, more preferably 40 - 60 wt.-% of the solid particulate filler **F.**

In one preferred embodiment, the acoustic damping material comprises at least one mineral filler **F1** and/or at least one cellulose-containing filler **F2.**

The at least one mineral filler **F1** is preferably present in the acoustic damping material in form of fine particles, particularly, having a median particle size d₅₀ of not more than 100 µm, preferably not more than 50 µm.

The term "median particle size d₅₀" refers to a particle size below which 50 % of all particles by volume are smaller than the d₅₀ value. The particle size distribution may be measured, for example, by sieve analysis according to the method as described in ASTM C136/C136M -2014 standard ("Standard Test Method for Sieve Analysis of Fine and Coarse Aggregates).

In one exemplary embodiment, the at least one mineral filler **F1** has a median particle size d₅₀ in the range of 0.1 - 100 µm, preferably 0.25 - 50 µm, more preferably 0.5 - 25 µm.

It may also be preferred that the mineral filler **F1** has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate.

In one embodiment, the at least one mineral filler **F1** is selected from the group consisting of calcium carbonate, magnesium carbonate, talc, kaolin, diatomaceous earth, wollastonite, feldspar, montmorillonite, dolomite, silica, cristobalite, mica, barium sulfate, graphite, ceramic spheres, hollow glass spheres, glass spheres.

It may be preferable that the acoustic damping material comprises several different mineral fillers, such as at least two different mineral fillers. Some of the mineral fillers may, for example, be used for improving the acoustic damping properties of the material whereas other may be used to enable adhering of the material to a metal substrate by magnetic force or for decreasing the weight of the material.

In one exemplary embodiment, the acoustic damping material comprises:
- At least one first mineral filler **F11** and/or
- At least one second mineral filler **F12** different from the at least one first mineral filler **F11** and/or
- At least one third mineral filler **F13** different from the at least one first mineral filler **F11** and from the at least one second mineral filler **F12.**

Particularly, the at least one first solid mineral filler **F11** may have a median particle size d₅₀ in the range of 1 - 100 µm and/or a true particle density of at least 1.5 g/cm³ and/or a number average particle aspect ratio of not more than 2.5.

The term "aspect ratio" refers in the present disclosure to the value obtained by dividing the length of a particle by the thickness of the particle. The "length of a particle" refers in the present disclosure to the maximum Feret diameter (X_{Fe,max}), i.e. the longest Feret diameter out of the measured set of Feret diameters. The term "Feret diameter" refers in the present disclosure to the distance between two tangents on opposite sides of the particle, parallel to some fixed direction and perpendicular to the measurement direction. The "thickness of a particle" refers in the present disclosure to the minimum Feret diameter (X_{Fe,min}), i.e. the shortest Feret diameter out of the measured set of Feret diameters. The aspect ratio is, therefore, calculated as the ratio of X_{Fe,max} and X_{Fe,min}.

The aspect ratio of a particle can be determined by measuring the length and thickness of the particle using any suitable measurement technique, such as by using dynamic image analysis method conducted according to ISO 13322-2:2006 standard and calculating the aspect ratio from the measured dimensions of the particle as described above. The dimensions of particles can be measured with a dry dispersion method, where the particles are dispersed in air, particularly by using air pressure dispersion method. The measurements may be conducted using any type of dynamic image analysis apparatus, such as a Camsizer XT device (trademark of Retsch Technology GmbH).

The term "number average aspect ratio" refers in the present disclosure to the arithmetic average of the individual aspect ratios of the particles within a sample or collection or a statistically significant and representative random sample drawn from such a sample or collection. The number average aspect ratio of a particulate material can be determined by measuring the dimensions of individual particles of the sample using any suitable measurement technique, preferably by using dynamic image analysis method conducted according to ISO 13322-2:2006 standard and calculating the number average aspect ratio from the measured dimensions of the individual particles as described above.

Furthermore, the at least one second mineral filler **F12** may have a median particle size d₅₀ in the range of 250 - 1000 µm and/or a true particle density of not more than 1.0 g/cm³.

In addition, the at least one third mineral filler **F13** may have a median particle size d₅₀ of at least 100 µm and/or a true particle density of at least 1.5 g/cm³ and/or a number average particle aspect ratio of at least 3.0.

In one exemplary embodiment, the first mineral filler **F11** is selected from the group consisting of calcium carbonate, magnesium carbonate, talc, kaolin, wollastonite, feldspar, montmorillonite, dolomite, silica, cristobalite, iron oxide, iron nickel oxide, strontium ferrite, and synthetic organic fillers and/or the second mineral filler **F12** is selected from the group consisting of hollow ceramic spheres, hollow glass spheres, hollow organic spheres, and glass spheres and/or the at least one third mineral filler **F13** is selected from the group consisting of mica, montmorillonite, slate, talc, barium sulfate, and graphite.

The cellulose-containing filler **F2** may be used instead of the mineral filler **F1,** particularly instead of the third mineral filler **F13,** or in addition to the mineral filler **F1,** particularly in addition to the first **F11** and/or second **F12** mineral filler.

In one exemplary embodiment, the cellulose-containing filler contains at least 25 wt.-%, preferably at least 35 wt.-%, more preferably at least 40 wt.-% of cellulose, based on the total weight of the cellulose-containing filler **F2.**

In one preferred embodiment, the cellulose-containing filler **F2** is composed of wood particles. The term "wood particle" refers to particles composed of wood fibers. The length dimension of a wood particle is typically orientated parallel to the grain structure of the wood particle, i.e. parallel to the orientation of the long axis of the dominant fibers in the wood particle.

Suitable wood particles for use as the at least one cellulose-containing filler **F2** include, for example, all types of soft wood and hard wood particles.

The term "softwood" refers to wood from conifers, i.e. wood from needle-bearing trees from the order Pinales. Softwood-producing trees include, for example, pine, spruce, cedar, fir, larch, douglas-fir, hemlock, cypress, redwood, and yew. Conversely, the term "hardwood" refers to wood from broad-leaved or angiosperm trees, such as eucalyptus, maple, birch, beech, aspen, and the like. Softwoods contain two types of cells, longitudinal wood fibers (or tracheids) and transverse ray cells whereas hardwood trees contain pores or vessels. In softwood, water transport within the tree is via the tracheids rather than the pores of hardwoods.

In one exemplary embodiment, the at least one cellulose-containing filler **F2** has:
- a median particle size d₅₀ in the range of 50 - 750 µm, preferably 75 - 650 µm, more preferably 100 - 550 µm and/or
- a d₉₀ particle size in the range of 150 - 2000 µm, preferably 175 - 1750 µm, more preferably 200 - 1500 µm and/or
- a d₁₀ particle size in the range of 15 - 300 µm, preferably 35 - 250 µm, more preferably 50 - 200 µm.

The at least one cellulose-containing filler **F2** may have a true particle density in the range of 0.25 - 1.5 g/cm³, preferably 0.30 - 1.25 g/cm³, more preferably 0.35 - 1.0 g/cm³, even more preferably 0.40 - 1.0 g/cm³. The term "true particle density" refers in the present disclosure to the real density of the particles that make up the particulate material. In contrast the term "bulk density" refers to the mass of the particulate material in a unit volume (including voids between particles).

Furthermore, the at least one cellulose-containing filler **F2** may have a true solid state density in the range of 1.00 - 2.00 g/cm³, preferably 1.25 - 1.85 g/cm³, more preferably 1.35 - 1.75 g/cm³, even more preferably 1.40 - 1.70 g/cm³.

The term "true solid state density" refers to the "skeleton density" of a material calculated as a ratio of the mass of a particle to the volume occupied by the mass, wherein the contribution of the pores or internal voids is subtracted from the volume when calculating the true solid state density. The true solid state density of a particle is preferably determined by helium gas pycnometer measurements.

In one exemplary embodiment, the acoustic damping material comprises:
- At least one first cellulose-containing filler **F21** and/or
- At least one second cellulose-containing filler **F22** different from the at least one first cellulose-containing filler **F21.**

Especially, the at least one first cellulose-containing filler **F21** may have a median particle size d₅₀ in the range of 100 - 450 µm, preferably 125 - 350 µm, more preferably 150 - 300 µm and/or at least one second cellulose-containing filler **F22** may have a median particle size d₅₀ in the range of 200 - 750 µm, preferably 250 - 650 µm, more preferably 300 - 600 µm.

In a first exemplary embodiment, the solid particulate filler **F** is composed of the at least one mineral filler **F1.**

In a second exemplary embodiment, the solid particulate filler **F** is composed of the at least one cellulose-containing filler **F2.**

In a third exemplary embodiment, the solid particulate filler **F** comprises or is composed of the at least one mineral filler **F1** and the at least one cellulose-containing filler **F2,** wherein the weight ratio of the total amount of **F1** to the total amount of **F2** is in the range of 10:1 to 1:1, preferably 7:1 to 2:1, more preferably 6:1 to 3:1.

The acoustic damping material may further contain at least one wax **W.**

The term "wax" designates in the present disclosure substances that have a waxy consistency and have a melting temperature or melting temperature range of above normal room temperature, in particular above 25 °C.

Suitable waxes to be used as the at least one wax include in particular synthetic waxes, for example, petroleum waxes, such as paraffin wax, petrolatum, and microcrystalline waxes, polyolefin waxes, polyethylene glycol waxes (Carbowax), amide waxes, and chemically modified waxes, such as hardened or hydrogenated waxes, for example, Montan ester waxes.

Particularly, the at least one wax **W** may be selected from the group consisting of polyolefin waxes, paraffin waxes, microcrystalline waxes, and amide waxes.

In one exemplary embodiment, the at least one wax **W** is a polyolefin wax.

The term "polyolefin wax" designates in the present disclosure low molecular weight polymers of linear or branched α-olefins having from 2 to 30 carbon atoms and a number average molecular weight (Mₙ) in the range of 5000 - 25000 g/mol. They include both homopolymers and copolymers of the above mentioned linear or branched α-olefins.

Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

In a further exemplary embodiment, the at least one wax **W** is an amide wax. The term "amide wax" designates in the present document waxes containing an amide bond (-CONH-) in the molecule or an amide group (-CONH₂) at the end of the molecule.

Especially suitable amide waxes include N,N'-ethylenebis(stearoamide), stearic acid amide, N,N'-methylenebis(stearoamide),and methylolstearoamide.

The acoustic damping material may comprise 0.1 - 15 wt.-%, such as 0.5 - 10 wt.-%, especially 0.5 -5 wt.-% of the at least one wax **W.**

The acoustic damping material may optionally contain one or more additives, which are customary for acoustic damping materials. Examples of suitable additives include, for example, pigments, thixotropic agents, thermal stabilizers, drying agents, and flame retardants. These additives, if used at all, preferably make up not more than 25 wt.-%, more preferably not more than 10 wt.-%, of the total weight of the acoustic damping material.

Another subject of the present invention is use of the damping material as discussed above for damping of vibrations and/or noise in transportation vehicles or white goods.

A further subject of the present invention is a damping element (1) comprising:
i) A damping layer (2) composed of the acoustic damping material as discussed above and
ii) Optionally an adhesive layer (3) covering at least a portion of an upper or lower major surface of the damping layer (2).

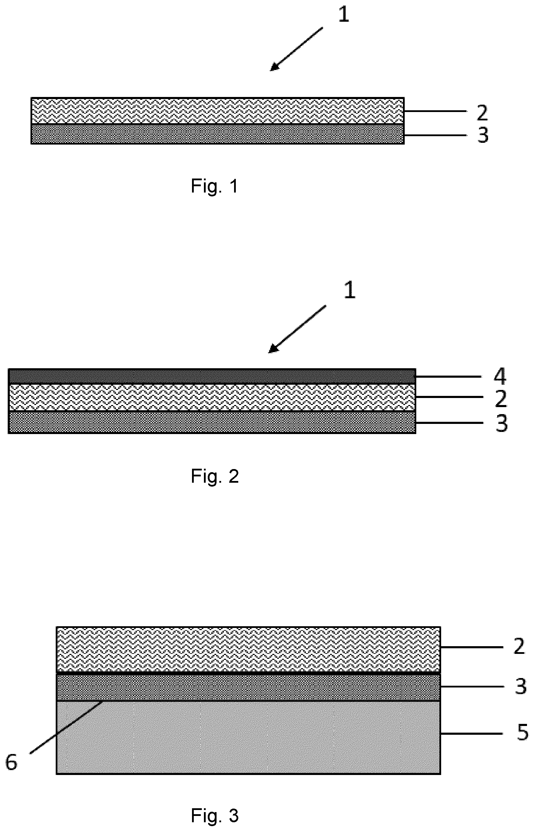

Such damping element is especially suitable for use in damping of undesired vibrations and noise in mechanical structures and components of manufactured articles, such as transportation vehicles or products of home appliance or general industry. A cross-section of an exemplary damping element is shown in Fig. 1.

The term "layer" refers in the present disclosure to a sheet-like element having upper and lower major surfaces ,a width defined between longitudinally extending edges, and a thickness defined between the upper and lower major surfaces. The term "thickness" refers to a dimension of a sheet-like element that is measured in a plane that is substantially perpendicular to the length and width dimensions of the element.

Particularly, the upper major surface of the damping layer may form one of the primary exterior surfaces of the damping element. The term "primary exterior surface" refers here to the outermost surfaces of the damping element.

In one embodiment, the damping layer (2) has a maximum thickness of 0.5 - 15 mm, preferably 1-10 mm, more preferably 1.5 - 7.5 mm, even more preferably 1.5 - 5 mm and/or a density in the range of 0.5 - 5 g/cm³, preferably 0.75 - 4.5 g/cm³, more preferably 1 - 3 g/cm³, even more preferably 1 - 2.5 g/cm³.

Suitable adhesives for use in the adhesive layer (3) include, particularly, pressure sensitive adhesives and hot-melt adhesives. The term "pressure sensitive adhesive" is understood to include also pressure sensitive hot-melt adhesives (HM-PSA), which are heated and applied as a melt to a surface of a substrate.

Pressure sensitive adhesives (PSA) are viscoelastic materials, which adhere immediately to almost any kind of substrate by application of light pressure and which are permanently tacky.

Suitable pressure sensitive adhesives for the adhesive layer (2) include adhesives based on acrylic polymers, styrene block copolymers, amorphous polyolefins (APO), amorphous poly-α-olefins (APAO), vinyl ether polymers, or elastomers such as, for example, butyl rubber, rubber like ethylene vinyl acetate copolymer, natural rubber, nitrile rubber, silicone rubber, and ethylene-propylene-diene rubber. In addition to the above mentioned polymers, the pressure sensitive adhesives typically comprise one or more additional constituents including, for example, tackifying resins, waxes, and plasticizers as wells as one or more additives such as, for example, UV-light absorption agents, UV- and heat stabilizers, optical brighteners, pigments, dyes, and desiccants.

Hot-melt adhesives are solvent free adhesives, which are solid at room temperature and which are applied to the substrate to be bonded in form of a melt. After cooling the adhesive solidifies and forms an adhesive bond with the substrate through physically and/or chemically occurring bonding. Suitable hot-melt adhesives include, for example, polyolefin-based hot-melt adhesives, in particular those based on amorphous polyolefins (APO) and amorphous poly-alpha-olefins (APAO), thermoplastic copolymer-based hot-melt adhesives, in particular those comprising copolymers ethylene and vinyl acetate (EVA) or polyamide as the main polymer component, and polyurethane-based hot-melt adhesives. In addition to the above mentioned polymers, suitable hot-melt adhesive compositions typically comprise one or more additional constituents including, for example, resins and waxes as well as one or more additives such as, for example, UV-light absorption agents, UV- and heat stabilizers, optical brighteners, pigments, dyes, and desiccants.

In one further embodiment, the damping element further comprises a constraining layer. IN case the damping element comprises an adhesive layer, the constraining layer is situated on the side of the damping layer that is opposite to the adhesive layer, i.e. the damping layer is sandwiched between the adhesive layer and the constraining layer. Damping elements according to this embodiment are generally known as "constrained layer dampers".

A cross-section of a damping element comprising a damping layer (2), an adhesive layer (3), and a constraining layer(4) is shown in Figure 2.

In one exemplary embodiment, the constraining layer is a metal sheet, preferably aluminum or steel sheet or a polymeric sheets, preferably glass fiber reinforced polymer sheet. The thickness of the constraining layer is not particularly restricted but the use of constraining layers that are thinner than the damping layer may be preferred. Preferred thickness also depends on the material of the constraining layer. In one embodiment, the constraining layer has a thickness of 0.05 - 1.5 mm, preferably 0.1 - 1.25 mm, more preferably 0.1 - 1.0 mm. In one exemplary embodiment, the constraining layer is a metal sheet having a thickness of 0.05 - 0.5 mm, preferably 0.05 - 0.4 mm or a polymeric sheet having a thickness of 0.1 - 1.2 mm, preferably 0.25 - 1.0 mm.

Especially the constraining layer may have an elastic modulus, which is higher than that of the damping layer, such larger by at least the factor 3, preferably at least the factor 5, more preferably at least a factor of 10, wherein the elastic modulus is measured by using the method as defined in ISO 6892-1:2016 standard (for metallic sheets) or as defined in ISO 527-2 standard (for polymeric sheets).

Another subject of the present invention is a method for producing a damping element as discussed above, the method comprising steps of:
i) Providing damping layer composed of the acoustic damping material of the present invention,
ii) Optionally applying an adhesive composition to an upper or lower major surface of the damping layer, and
iii) Optionally cutting the composite element provided in step i) or ii) to a pre-determined length and/or width.

The damping layer can be provided by mixing the constituents of the acoustic damping material at an elevated temperature until a homogeneously mixed mixture is obtained followed by processing the homogeneously mixed mixture into a form of a shaped article.

The term "homogeneously mixed mixture" refers in the present disclosure to compositions, in which the individual constituents are distributed substantially homogeneously in the composition. Furthermore, a homogeneously mixed mixture can be multi-phase mixture. For example, a homogeneously mixed mixture of a polymer component and a filler component, therefore, refers to composition in which the constituents of the filler phase are homogeneously/uniformly distributed in the polymer phase. For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Any conventional type of a mixing apparatus can be used for mixing of the constituents of the acoustic damping material. The mixing step can be conducted as a batch process using a conventional batch-type mixer, such as a Dreis mixer, a Brabender mixer, a Banbury mixer, or a roll mixer or as a continuous process using a continuous-type mixer, such as an extruder, in particular a single-, a twin-screw extruder or a planetary roller extruder. It may be advantageous to heat the constituents before or during mixing, either by applying external heat sources or by friction generated by the mixing process itself, in order to facilitate processing of the constituents into a homogeneously mixed mixture by decreasing viscosities and/or melting of individual constituents.

The homogeneously mixed mixture of the constituents of the acoustic damping material can subsequently be processed into a form of a shaped article by using any conventional techniques, such as extruding, blow-molding, injection molding, compression molding, calendering, or hot-pressing techniques.

The adhesive composition can be applied to a surface of the damping layer using any conventional techniques in step ii) of the method. The details of the application step depend on the type of the adhesive composition. For example, the adhesive composition can be applied on the surface of the sheet by nozzle extrusion, powder dispersion, hot-melt calendaring, or by spray lamination techniques. In case of a hot-melt adhesive or a hot-melt pressure sensitive adhesive, the adhesive composition is first heated to an elevated application temperature above the softening point (Tₛ) of the adhesive before being applied to the surface of the damping layer.

Step iii) of the method for producing a damping element can be conducted, for example, by punch or die cutting.

Another subject of the present invention is use of the damping element of the present invention for damping of vibrations and/or noises of structures in transportation vehicles or white goods or for baffling and/or reinforcing of structures in transportation vehicles.

Still another subject of the present invention is a method for preparing a vibration and/or noise damped system comprising a structure having a noise emitting surface, the method comprising steps of:
I) Providing a damping element of the present invention,
II) Applying the damping element to the noise emitting surface.

In one exemplary embodiment, the structure having a noise emitting surface is part of a transportation vehicle or a white good.

In one further embodiment, the damping element comprises a damping layer and an adhesive layer covering at least a portion of an upper or lower major surface of the damping layer and step II) of the method comprises:
IIa) Contacting the outer major surface of the adhesive layer with the noise emitting surface and applying sufficient pressure to form an adhesive bond between the noise emitting surface and the damping layer or
IIb) Heating the adhesive layer and/or the structure and contacting the outer major surface of the adhesive layer with the noise emitting surface and forming an adhesive bond between the noise emitting surface and the damping layer by cooling of the adhesive layer.

The term "outer major surface" of the adhesive layer refers to the major surface of the adhesive layer facing away from the damping layer.

Still another subject of the present invention is a vibration and/or noise damped system comprising a structure (5) having a noise emitting surface (6) and a damping element (1) as discussed above, wherein least a portion of the damping layer (2) is adhered to the noise emitting surface (6), and wherein said structure (5) having the noise emitting surface (6) is preferably part of a transportation vehicle or a white good.

In one embodiment, the damping layer (2) is adhered to the noise emitting surface (6) via an adhesive layer (3). A cross-section of such vibration and/or noise damped system is shown in Figure 3.

### Examples

The followings products shown in Table 1 were used in the examples.

**Table 1**

| **Name** | **Chemical description** | **Supplier** |
|---|---|---|
| TOP | Tall oil pitch | UCY- Energy |
| EVA1 | Ethylene vinyl acetate copolymer resin, vinyl acetate content 28 wt. -%, MFI (190 °C, 2.16 kg) 400 g/10 min (ASTM D1238) | Repsol |
| EVA2 | Ethylene vinyl acetate copolymer resin, vinyl acetate content 12.5 wt. -%, MFI (190 °C, 2.16 kg) 4 g/10 min (ASTM D1238) | Repsol |
| PE | Polyethylene, MFI (190 °C, 2.16 kg) 150 g/10 min (ISO 1133) | Repsol |
| PP | Propylene-ethylene random copolymer | Exxon Mobil |
| SB | Butadiene/styrene thermoplastic copolymer | Dynasol |
| Wax | N,N'-ethylene bis stearamide | LG Chemical |
| TR1 | Amorphous, low molecular weight hydrocarbon resin derived from aromatic petrochemical feedstocks | Synthomer |
| TR2 | Aliphatic hydrocarbon resin, softening Point 98-102 °C (Ring & Ball, 98-102 ASTM E 28) | Zibo Luhua Hongjin Chemical |
| Chalk | Calcium carbonate, d₅₀ particle size 2.5 µm, sieve rest 45 µm < 0.10 % | SH minerals GmbH |
| Mica | Mica, 20-60 mesh minimum 85 % (ASTM E 11-70) | Normag GmbH |
| Wood particles 0.2 | Wood flour, d₅₀ particle size 170-220 µm, d₉₀ particle size 270-320 µm | Pacyga com positive |
| Wood particles 0.4 | Wood flour, average particle size 370-490 µm, maximum particle size 1600-1800 µm | Pacyga com positive |
| Gratec cellulose fibers | | |
| Expanded glass | Expanded glass spheres | |
| Additives | Color pigment, antioxidant, rheological additive | |
| Calcium oxide | Calcium oxide | |

### Preparation of damping layers

Damping layers having the compositions of Table 2 were prepared according to the following procedure.

In a first step, tall oil pitch, thermoplastic polymers, and tackifying resins were mixed in a batch type mixer until a homogeneously mixed mixture was obtained. After this, the remaining components of the damping material were added and the mixing was continued until a homogeneously mixed mixture was obtained. The thus obtained mixture was processed into sheets having a thickness of ca. 2.5 mm by using a conventional calendering apparatus.

The composition of reference example Ref-1 was a standard acoustical bitumen sheet SikaDamp- F04 LA20 (from Sika AG).

### Measurement of density

The densities of the damping layers were measured according to EN ISO 1183-1:2019 standard using a water immersion method (Archimedes principle) in deionized water and a precision balance to measure the mass of the test specimens.

### Loss factor

Test specimens having suitable dimensions were obtained from the previously prepared damping layers by cutting or die cutting. One of the major surfaces of each test specimen was coated with a layer of pressure sensitive acrylate-based adhesive. The adhesive layer had a thickness of 50 µm.

The loss factors for the test specimen were determined by using the measurement method as defined in ISO 6721 standard. The measurements were conducted using a commercially available loss factor tester at a temperature in the range of from -20 to 20 °C. The values of the loss factor at the frequency of 200 Hz were obtained from the measured values of the loss factor value by mathematical means.

Measured values obtained with reference and exemplary damping layers are shown in Table 2.

**Table 2**

| **Compositions [pbw]** | ***Ref-1** | **Ex-1** | **Ex-2** |
|---|---|---|---|
| TOP | | 27.70 | 11.00 |
| EVA1 | | 0.00 | 2.50 |
| EVA2 | | 0.00 | 1.00 |
| PE | | 0.70 | 0.00 |
| PP | | 0.00 | 3.50 |
| SB | | 3.40 | 0.00 |
| Wax | | 0.50 | 0.00 |
| TR1 | | 0.00 | 17.00 |
| TR2 | | 4.30 | 0.00 |
| Chalk | | 28.20 | 23.10 |
| Mica | | 19.90 | 23.00 |
| Wood particles 0.2 | | 0.00 | 6.50 |
| Wood particles 0.4 | | 0.00 | 6.50 |
| Gratec cellulose fibers | | 8.90 | 0.00 |
| Expanded glass | | 1.50 | 0.00 |
| Additives | | 3.00 | 3.40 |
| Calcium oxide | | 2.00 | 2.50 |
| Total | | 100.10 | 100.00 |
| Density [g/cm³] | 1.503 | 1.47 | 0.00 |
| Area weight [kg/m²] | 3.42 | 3.65 | 3.24 |
| Thickness at room temperature [mm] | 2.45 | 2.55 | 2.45 |
| Loss factor @T [°C] (200 Hz) | | | |
| 20 | 0.144 | 0.10 | 0.06 |
| 10 | 0.139 | 0.15 | 0.12 |
| 0 | 0.099 | 0.15 | 0.14 |
| -10 | 0.069 | 0.10 | 0.11 |
| -20 | 0.046 | 0.07 | 0.08 |

| | | | |
|---|---|---|---|
| *SikaDamp- F04 LA20 | | | |

## Claims

1. An acoustic damping material comprising:
a) Tall oil pitch **TOP,**
b) At least one tackifying resin **TR,**
c) Optionally at least one thermoplastic polymer **TP,** and
d) At least 15 wt.-%, preferably at least 25 wt.-% of at least one solid particulate filler **F.**

2. The acoustic damping material according to claim 1 comprising 1.5 - 45 wt.-%, preferably 5 - 40 wt.-% of the tall oil pitch **TOP.**

3. The acoustic damping material according to claim 1 or 2, wherein the tall oil pitch **TOP** has an acid value measured according to EN 2114:2000 standard of 5 - 75 mg KOH/g, preferably 10 - 50 mg KOH/g.

4. The acoustic damping material according to any one of previous claims comprising 0.5 - 35 wt.-%, preferably 2.5 - 30 wt.-% of the at least one tackifying resin **TR.**

5. The acoustic damping material according to any one of previous claims, wherein the at least one tackifying resin **TR** has a softening point determined by Ring and Ball measurement conducted according to EN 1238:2011 standard of 75 - 165 °C, preferably 85 - 150 °C.

6. The acoustic damping material according to any one of previous claims comprising 0.5 - 20 wt.-%, preferably 1 - 15 wt.-% of the at least one thermoplastic polymer **TP.**

7. The acoustic damping material according to any one of previous claims, wherein the at least one thermoplastic polymer **TP** is selected from ethylene vinyl acetate copolymers, polyethylenes, propylene copolymers, and styrene block copolymers.

8. The acoustic damping material according to any one of previous claims comprising 25 - 75 wt.-%, preferably 35 - 65 wt.-% of the solid particulate filler **F.**

9. The acoustic damping material according to any one of previous claims comprising at least one mineral filler **F1** and/or at least one cellulose-containing filler **F2,** preferably composed of wood particles.

10. Use of the damping material according to any one of previous claims for damping of vibrations and/or noise in transportation vehicles or white goods.

11. A damping element (1) comprising:
i) A damping layer (2) composed of the acoustic damping material according to any one of claims 1-9 and
ii) Optionally an adhesive layer (3).

12. A method for preparing a vibration and/or noise damped system comprising a structure having a noise emitting surface, the method comprising steps of:
I) Providing a damping element according to claim 11,
II) Applying the damping element to the noise emitting surface.

13. The method according to claim 12, wherein the structure is part of a transportation vehicle or a white good.

14. The method according to claim 12 or 13, wherein the damping element comprises an adhesive layer and step II) comprises:
IIa) Contacting the outer major surface of the adhesive layer with the noise emitting surface and applying sufficient pressure to form an adhesive bond or
IIb) Heating the adhesive layer and/or the structure and contacting the outer major surface of the adhesive layer with the noise emitting surface and forming an adhesive bond by cooling of the adhesive layer.

15. A vibration and/or noise damped system comprising a structure (5) having a noise emitting surface (6) and a damping element (1) according to claim 11, wherein least a portion of the damping layer (2) is adhered to the noise emitting surface (6), and wherein said structure (5) having the noise emitting surface (6) is preferably part of a transportation vehicle or a white good.
